# EUROPÄISCHE PATENTSCHRIFT

(11) **EP 0 660 019 B1**
(45) Veröffentlichungstag und Bekanntmachung des Hinweises auf die Patenterteilung: **05.02.1997**
(21) Anmeldenummer: 94890186.3
(22) Anmeldetag: 28.10.1994
(51) Int. Cl.: F16L 3/24, E03C 1/02

(54) **Verfahren zur Befestigung eines mit weingstens zwei Befestigungslöchern versehenen Rohrleitungs-Formstückes aus Kunststoff an gelochten Blechträgern**
Methode for connecting a plastic pipe fitting with at least two fastening holes to a perforated sheet metal support
Méthode pour relier une pièce de raccordement de tuyau en matière plastique comportant au moins deux trous de fixation à un support réalisé en tôle métallique perforée

(30) Priorität: 27.12.1993 AT 2629/93
(43) Veröffentlichungstag der Anmeldung: 28.06.1995
(73) Patentinhaber: KE-KELIT Kunststoffwerk Gesellschaft m.b.H., A-4017 Linz (AT)
(72) Erfinder: Wolf, Helmut, A-4240 Waldburg bei Freistadt (AT)
(74) Vertreter: Hübscher, Heiner, Dipl.-Ing.

(56) Entgegenhaltungen:
- DE-A- 1 775 471
- DE-U- 9 301 520
- GB-A- 2 193 280

## Beschreibung

Die Erfindung bezieht sich auf ein Verfahren zur Befestigung eines Rohrleitungsrormstückes aus Kunststoff mit zwei gelochten Seitenlappen an einem gelochten Blechträger (siehe z.B. DE-U-93 01 520), insbesondere bei zwischen zwei Deckplatten von Hohlwänden verlegten Rohrleitungen.

Bei solchen Hohlwänden, bei denen in der Regel zwischen Metallstehern als Deckplatten Gips-Kartonplatten, sogenannte Rigips-Platten verwendet werden und die Rohrleitungen zwischen diesen Platten anzuordnen sind, bestehen Schwierigkeiten, die erforderlichen Formstücke für die Leitungen, also z.B. Rohrkniee, die außerhalb einer der Deckplatten liegende Armaturen aufnehmen, so zu befestigen, daß bei den Manipulationen an den Armaturen keine Lockerung auftritt. Die Rigips-Platten weisen nämlich nicht die erforderliche Festigkeit auf, um derartige Formstücke oder die Armaturen selbst festzuhalten. Es werden daher an den Stehern der Hohlwände Holz- oder Blechträger befestigt, die dann erst zur Befestigung der Formstücke bzw. Armaturen dienen, wobei diese an den Trägern festgeschraubt werden. Handelt es sich um Blechträger, so besteht die Gefahr, daß durch die in unmittelbarer Berührung mit den Blechträgern angeordneten Schrauben der Körperschall von den durchströmten Leitungen bzw.

Formstücken auf die Blechträger übertragen wird, so daß entsprechende Geräusche unvermeidbar sind. Dazu kommen noch gewisse Montageschwierigkeiten, weil die Löcher in den Blechträgern erst den örtlichen Gegebenheiten bzw. den Befestigungslöchern der Formstücke in ihrer Anordnung angepaßt werden müssen.

Der Erfindung liegt daher die Aufgabe zugrunde, ein Verfahren zur Befestigung der eingangs geschilderten Art zu schaffen, die sowohl eine beträchtliche Geräuschminderung als auch eine Montagevereinfachung gewährleistet.

Diese Aufgabe wird erfindungsgemäß dadurch gelöst, daß ein Kunststoffstreifen vorgesehen ist, der im Abstand der Befestigungslöcher der seitlichen Lappen voneinander an einer Seite flache Zapfen aufweist, deren Außendurchmesser dem Durchmesser der Löcher im Blechträger entspricht und die eine Axialbohrung zur Aufnahme einer selbstschneidenden Schraube besitzen.

Durch die Zapfen wird eine Berührung der Schrauben am Blechträger bzw. an der Lochwand des Blechträgers verhindert, da ja zwischen den Schrauben in der Axialbohrung und der Lochwandung im Blechträger die entsprechend elastisch nachgiebige Zapfenwandung liegt, die die Körperschallübertragung wesentlich hemmt. Es braucht also jeweils nur der Kunststoffstreifen von der einen Seite des Blechträgers mit seinen Zapfen in die Löcher des Blechträgers eingesteckt, von der anderen Seite das Formstück angesetzt und angeschraubt zu werden, wobei kein vorgefertigtes Gewinde erforderlich ist, da es sich ja um selbstschneidende Schrauben, die bei Kunststoff ohne weiteres verwendbar sind, handelt.

Um die angestrebte Schalldämpfung noch weiter zu erhöhen, besteht der Kunststoffstreifen mit den Zapfen aus demselben Werkstoff wie das Formstück, vorzugsweise aber aus einem Material mit geringerer Shore-Härte.

Um das Formstück bzw. die Armatur od.dgl. unter Beibehaltung der Befestigungsebene in ganz verschiedenen Drehstellungen am Blechträger befestigen zu können, ohne zusätzliche Arbeiten bei der Montage vornehmen zu müssen, besitzen die Blechträger jeweils fünf parallele Lochreihen, von denen die beiden äußersten den Normalabstand der Zapfen aufweisen, die Löcher der mittleren Reihe selbst in Zapfenabständen angeordnet sind und die beiden übrigen Lochreihen aus Löchern bestehen, deren zugehörige Löcher der jeweils anderen Reihe in unter 45° zur Reihenlängsrichtung gemessenem Zapfenabstand liegen. Wird der Blechträger, was am häufigsten der Fall ist, vertikal angeordnet, so kann dann jeweils das Formstück mit in einer Waagrechten oder Senkrechten liegenden Befestigungslöchern oder aber auch so befestigt werden, daß die Befestigungslöcher nach der einen oder anderen Seite in einer unter 45° zur Lochreihenrichtung des Blechträgers verlaufenden Geraden liegen.

In der Zeichnung ist der Erfindungsgegenstand in einem Ausführungsbeispiel dargestellt, und zwar zeigen
- Fig. 1: einen zur Befestigung dienenden Kunststoffstreifen in Ansicht,
- Fig. 2: im Längsschnitt,
- Fig. 3: ein als Rohrknie dienendes Leitungsformstück in Ansicht,
- Fig. 4: das befestigte Formstück im Schnitt nach der Linie IV-IV der Fig. 3 und
- Fig. 5: einen bandförmigen Blechträger in Ansicht.

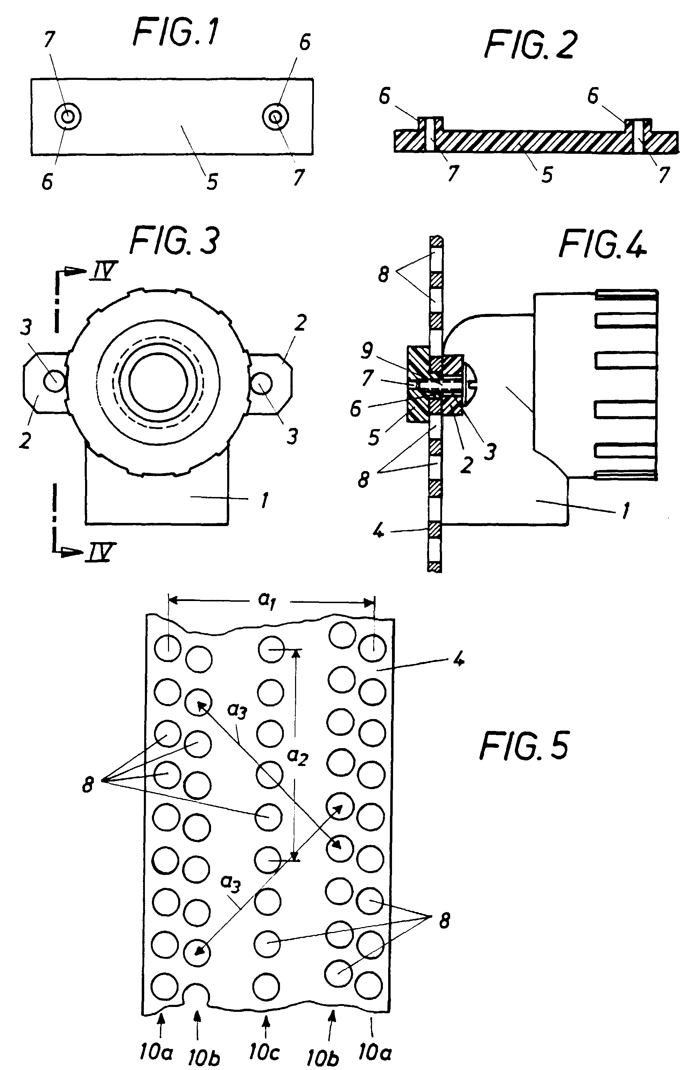

Das als Rohrknie ausgebildete Formstück 1, in das von unten her die Rohrleitung mündet und von vorne eine Armatur eingeschraubt wird, besitzt zwei seitliche Lappen 2 mit je einem Befestigungsloch 3. Zur Befestigung an den aus einem starken Blechband bestehenden gelochten Blechträger 4 dient ein Kunststoffstreifen 5, der im Abstand der Befestigungslöcher 3 voneinander an einer Seite flache Zapfen 6 mit einer Axialbohrung 7 besitzt. Der Außendurchmesser der Zapfen 6 entspricht dem Durchmesser der Löcher 8 im Blechträger 4. Wie sich aus Fig. 4 erkennen läßt, wird das Formstück 1 mit Hilfe von selbstschneidenden Schrauben 9 befestigt, wobei diese Schrauben zufolge der Zapfen 6 bzw. der Durchmesserwahl gegenüber den Löchern 8 des Blechträgers 4 mit der Wandung der Löcher 8 keine Berührung haben.

Wie Fig. 5 zeigt, besitzt der Blechträger 4 fünf parallele Lochreihen 10a, 10b und 10c, wobei der Abstand a1 der beiden äußersten Lochreihen 10a dem Abstand der Zapfen 6 entspricht, die Löcher der mittleren Reihe 10c selbst in Zapfenabständen a2 angeordnet sind und die Löcher der Lochreihen 10b aus Löchern 8 bestehen, deren zugehörige Löcher der jeweils anderen Reihe in unter 45° zur Längsrichtung gemessenem Zapfenabstand a3 liegen, so daß das Formstück 1 in bezug auf seine Befestigungslöcher 3 waagrecht (Lochreihen 10a), senkrecht (Lochreihen 10c) oder in der einen oder anderen Schräglage (Lochreihen 10b) befestigt werden kann.

## Patentansprüche

1. Verfahren zur Befestigung eines Rohrleitungsformstückes (1) aus Kunststoff mit zwei gelochten Seitenlappen (2) an einem gelochten Blechträger (4), insbesondere bei zwischen zwei Deckplatten von Hohlwänden verlegten Rohrleitungen, dadurch gekennzeichnet, daß ein Kunststoffstreifen (5) vorgesehen ist, der im Abstand der Befestigungslöcher (3) der seitlichen Lappen (2) voneinander an einer Seite flache Zapfen (6) aufweist, deren Außendurchmesser dem Durchmesser der Löcher (8) im Blechträger (4) entspricht und die eine Axialbohrung (7) zur Aufnahme einer selbstschneidenden Schraube (9) besitzen.

2. Verfahren zur Befestigung nach Anspruch 1, dadurch gekennzeichnet, daß der Kunststoffstreifen (5) mit den Zapfen (6) aus demselben Werkstoff wie das Formstück (1), vorzugsweise aus einem Material mit geringerer Shore-Härte, besteht.

3. Verfahren zur Befestigung nach Anspruch 1, dadurch gekennzeichnet, daß die Blechträger (4) jeweils fünf parallele Lochreihen (10a, 10b, 10c, 10b, 10a) besitzen, von denen die beiden äußersten (10a) den Normalabstand (a1) der Zapfen (6) aufweisen, die Löcher (8) der mittleren Reihe (10c) selbst in Zapfenabständen (a2) angeordnet sind und die beiden übrigen Lochreihen (10b) aus Löchern (8) bestehen, deren zugehörige Löcher (8) der jeweils anderen Reihe (10b) im unter 45° zur Reihenlängsrichtung gemessenen Zapfenabstand (a3) liegen.

## Claims

1. A method of fixing a plastic pipeline moulding (1) having two perforated side lugs (2) to a perforated sheet-metal support (4), more particularly in the case of pipelines laid between two outer panels of hollow walls, characterised in that a plastic strip (5) is provided, which on one side has flat studs (6) spaced apart with the same spacing from one another as the spacing between the fixing holes (3) in the side lugs (2), the outside diameter of the studs corresponding to the diameter of the holes (8) in the sheet-metal support (4) and said studs having an axial bore (7) to receive a self-tapping screw (9).

2. A fixing method according to claim 1, characterised in that the plastic strip (5) with the studs (6) consists of the same material as the moulding (1), preferably a material having a lower Shore hardness.

3. A fixing method according to claim 1, characterised in that the sheet-metal supports (4) each have five parallel rows of holes (10a, 10b, 10c, 10b, 10a), of which the two outermost (10a) have the normal spacing (a1) of the studs (6), the holes (8) of the middle row (10c) are disposed themselves at the stud spacing (a2) and the other two rows of holes (10b) consist of holes (8) whose associated holes (8) in the respective other row (10b) are situated in the stud spacing (a3) measured at 45° to the longitudinal direction of the rows.

## Revendications

1. Procédé de fixation d'une pièce façonnée de tuyauterie (1) en matière plastique, comportant deux languettes latérales (2) percées, à un support en tôle (4) perforée, en particulier pour des conduites tubulaires posées entre deux plaques de couverture de paroi creuse, caractérisé en ce qu'une bande de matière plastique (5) est prévue qui présente des tourillons (6) qui sont plats sur un côté, à distance des trous de fixation (3) des languettes latérales (2), et dont le diamètre extérieur correspond au diamètre des trous (8) ménagés dans le support en tôle (4) et qui ont un perçage axial (7) destiné à recevoir une vis (9) auto-taraudeuse.

2. Procédé de fixation selon la revendication 1, caractérisé en ce que la bande en matière plastique (5) avec les tourillonss (6) sont constitués du même matériau que la pièce façonnée (1) de préférence en un matériau à faible dureté Shore.

3. Procédé de fixation selon la revendication 1, caractérisé en ce que les supports de tôle (4) ont respectivement cinq rangées de trous (10a, 10b, 10c, l0b, 10a) parallèles, dont les deux rangées de trous extérieurs (10a) présentent l'espacement normal (a1) des tourillons (6), les trous (8) de la rangée (10c) médiane elle-même sont disposés suivant des espacements (a2) entre tourillons, et les deux autres rangées de trous (10b) sont constituées de trous (8) dont les trous (8) afférents de chaque deuxième rangée (10b) sont situés selon un espacement (a3) entre tourillons, mesuré à 45° par rapport à la direction longitudinale des rangées.
